**Europäisches Patentamt**

**European Patent Office**

**Office européen des brevets**

(19)

(11) Veröffentlichungsnummer: **0 118 412**

**A2**

(12) ## EUROPÄISCHE PATENTANMELDUNG

(21) Anmeldenummer: **84890010.6**

(22) Anmeldetag: **16.01.84**

(51) Int. Cl.³: **C 22 B 4/00**
    **C 21 B 13/12**

(30) Priorität: **03.02.83 AT 366/83**

(43) Veröffentlichungstag der Anmeldung:
    **12.09.84 Patentblatt 84/37**

(84) Benannte Vertragsstaaten:
    **BE DE FR GB IT LU NL SE**

(71) Anmelder: **VOEST-ALPINE Aktiengesellschaft**
    **Muldenstrasse 5**
    **A-4020 Linz(AT)**

(72) Erfinder: **Lugscheider, Walter, Dr. Dipl.-Ing.**
    **Biesenfeldweg 2**
    **A-4045 Linz(AT)**

(72) Erfinder: **Steipe, Othmar, Dipl.-Ing.**
    **Lissagasse 8**
    **A-4020 Linz(AT)**

(72) Erfinder: **Riegler, Ernst**
    **Grollerstrasse 5**
    **A-4470 Enns(AT)**

(72) Erfinder: **Zajicek, Ernst**
    **Donaulände 10**
    **A-4100 Ottensheim(AT)**

(74) Vertreter: **Wolfram, Gustav, Dipl.-Ing.**
    **Schwindgasse 7 P.O. Box 205**
    **A-1041 Wien(AT)**

(54) **Verfahren zur Durchführung von Schmelz-, schmelzmetallurgischen und/oder reduktionsmetallurgischen Prozessen in einem Plasmaschmelzofen sowie Einrichtung zur Durchführung des Verfahrens.**

(57) Bei dem Verfahren werden im Innenraum des Plasmaschmelzofens frei brennende Plasmafackeln zwischen durch den Deckel oder durch die Seitenwände des Ofenkörpers geführten Plasmabrennern und einer Bodenelektrode erzeugt und einzuschmelzende bzw. umzusetzende Zuschlag- bzw. Reaktionsstoffe werden in den Bereich der Plasmafackeln chargiert.

Um den thermischen Wirkungsgrad und damit die Kinetik des Prozesses in den aufzuschmelzenden bzw. umzusetzenden Chargen zu verbessern, wird die Erkenntnis, daß durch Ausbildung von Plasmafackeln, die verschiedene Gase mit verschiedenem Spannungsgradienten enthalten, sowohl die Länge der Fackeln als auch die Energieabgabe geregelt, insbesondere erhöht werden kann, genützt, indem zusätzliche, vom ursprünglichen Plasmagas verschiedene Gasströme in die frei brennenden Plasmafackeln eingeleitet werden, um den Energieeintrag in das schmelzflüssige Reaktionsbad zu erhöhen bzw. dessen Temperatur zu regeln.

Bei der Einrichtung mit einem Ofen, durch dessen Deckel (2) bzw. Seitenwände Plasmabrenner (4) geführt sind und in dessen Boden eine Gegenelektrode (6) angeordnet ist, sind Zuführvorrichtungen für zusätzliche Gasströme in den Bereich der Plasmafackeln (7) vorgesehen.

*FIG.1*

EP 0 118 412 A2

- 1 -

**Verfahren zur Durchführung von Schmelz-, schmelzmetallurgischen und/oder reduktionsmetallurgischen Prozessen in einem Plasmaschmelzofen sowie Einrichtung zur
Durchführung des Verfahrens**

Die Erfindung betrifft ein Verfahren zur Durchführung
von Schmelz-, schmelzmetallurgischen und/oder reduktionsmetallurgischen Prozessen in einem Plasmaschmelzofen, in
dessen Innenraum frei brennende Plasmafackeln zwischen
durch den Deckel oder durch die Seitenwände des Ofenkörpers geführten Plasmabrennern und einer Bodenelektrode erzeugt werden, und einzuschmelzende bzw. umzusetzende Zuschlag- bzw. Reaktionsstoffe in den Bereich
der Plasmafackeln chargiert werden, sowie eine Einrichtung zur Durchführung des Verfahrens.

Verfahren dieser Art sind bekannt, wobei als Plasmagas
üblicherweise Argon, Stickstoff, Helium oder Wasserstoff verwendet werden. Diese Gase haben einen verschiedenen elektrischen Spannungsgradienten ($E = U \cdot cm^{-1}$),
wobei Argon den niedrigsten und Wasserstoff den höchsten
Spannungsgradienten aufweisen. Von der Größe des Spannungsgradienten ist die Länge der sich ausbildenden
Plasmafackeln abhängig, was bedeutet, daß bei einem
Gas mit niedrigerem Spannungsgradienten unter sonst
gleichen Bedingungen die Plasmafackel länger ist. So
hat bei Verwendung von Argon als Plasmagas und einer
Spannung von etwa 800 V die Plasmafackel eine Länge
bis zu etwa 1 m, wogegen bei Verwendung von Wasserstoff
als Plasmagas und gleicher Spannung und Stromstärke die
Fackel eine Länge von nur etwa 10 cm aufweist.

Bei der Durchführung von Schmelz- und Reduktionsprozessen unter Verwendung von Plasmafackeln als Energieträger wurde die durch Strahlung abgegebene Energie der Plasmafackeln nicht in erwünschter Weise ausgenutzt, weil die höchste Energiedichte der Plasmafackeln nahe der Plasmabrennermündungen entwickelt wird. Der Plasmastrahl wird, je weiter er von der Mündung entfernt ist, aufgefächert und damit energieärmer, indem die abgegebene Energie in Abhängigkeit vom Abstand von der Mündung fortlaufend abnimmt. Dies hat zur Folge, daß insbesondere bei Aufschmelzprozessen, bei welchen durch das Niederschmelzen stückiger Einsatzstoffe ein Sumpf gebildet wird, im Laufe des Schmelzprozesses dem Bad immer weniger Energie zugeführt wird, wogegen ein unerwünscht großer Teil der Energie an die Ofeninnenwände abgegeben wird. Ein Nachfahren der Plasmabrenner hat wenig Wirkung, weil dadurch die Bögen kürzer werden und mit sinkender Spannung die abgegebene Energie zurückgeht.

Die Erfindung bezweckt die Vermeidung dieser Nachteile und stellt sich die Aufgabe, ein Verfahren sowie die zugehörigen Einrichtungen zu schaffen, um den Energieeintrag in die aufzuschmelzenden bzw. umzusetzenden Chargen zu erhöhen und damit den thermischen Wirkungsgrad bzw. die Kinetik des Prozesses zu verbessern. Die Erfindung beruht auf der Erkenntnis, daß durch Ausbildung von Plasmafackeln, die verschiedene Gase mit verschiedenem Spannungsgradienten enthalten, sowohl die Länge der Fackeln als auch die Energieabgabe geregelt, insbesondere erhöht werden kann.

Dementsprechend besteht die Erfindung bei einem Verfahren der eingangs beschriebenen Art darin, daß zusätzliche, vom ursprünglichen Plasmagas verschiedene Gasströme in die frei brennenden Plasmafackeln eingeleitet werden, um den Energieeintrag in das schmelzflüssige Reaktionsbad zu erhöhen bzw. dessen Temperatur zu regeln.

Nach einer bevorzugten Ausführungsform werden die zusätzlichen Gasströme durch poröse Steine oder Düsen im Boden des Plasmaofens zugeleitet, wobei sie die Auftreffflächen (Brennflecke) von schräg auf die Oberfläche des Einschmelzgutes (Sumpfoberfläche) gerichteten Plasmafackeln treffen.

Es ist aber auch möglich, die zusätzlichen Gasströme auf andere Weise in die Plasmafackeln einzuleiten und damit deren Zusammensetzung zu ändern, beispielsweise mit Hilfe von Rohrbündeln, die konzentrisch um den bzw. die Plasmabrenner angeordnet sind oder aber auch durch seitlich durch die Ofenwand geführte Strahlrohre.

Erfindungsgemäß ist es auch möglich, daß in den zusätzlichen Gasströmen feinteilige Zuschlag- bzw. Reaktionsstoffe suspendiert und dem Reaktionsbad zugeführt werden. Hierbei können als feinteilige Zuschlag- bzw. Reaktionsstoffe Kalk, Erze für Ferrolegierungen, Kohle oder eisenoxidhältige Materialien verwendet werden.

Eine andere Ausführungsform der Erfindung kann darin bestehen, daß den einzuschmelzenden bzw. umzusetzenden Einsatzstoffen gasentwickelnde Stoffe zugesetzt werden, z.B. Kohle, die zu CO vergast, wobei das entstehende CO sich mit dem Plasmagas vermischt. Je nach der Einbringungsstelle der zusätzlichen Gasströme können Zonen gebildet werden, die beispielsweise an der Mündung aus reinem Argon, in der Mitte der Plasmafackel aus einem Mischgas aus Argon und CO und an der Badoberfläche aus reinem CO bestehen. Der Spannungsgradient von CO ist, wie gefunden wurde, etwa drei- bis viermal so groß wie der von Argon unter gleichen Bedingungen, er entspricht etwa jenem von Helium. Mit diesen Eigenschaften ist es möglich, eine Plasmafackel, die bei 800 V etwa 1 m lang ist, bei voller Leistung auf etwa 25 cm zu verkürzen und gleichzeitig das abgestrahlte Energiemaximum dem Bad zu nähern.

Bei Verwendung von Kohle als Zuschlagstoff wird nicht nur die abgestrahlte Energie der Plasmafackel besser ausgenutzt, sondern es wird bei gleichzeitiger Anwesenheit bzw. Einbringen von Sauerstoff auch die Verbrennungsenergie der Kohle ausgenutzt.

Die Erfindung umfaßt weiters eine Einrichtung zur Durchführung des erfindungsgemäßen Verfahrens mit einem Ofen, durch dessen Deckel bzw. Seitenwände Plasmabrenner geführt sind und in dessen Boden eine Gegenelektrode angeordnet ist. Diese Einrichtung ist dadurch gekennzeichnet, daß Zuführvorrichtungen für zusätzliche Gasströme in den Bereich der Plasmafackeln vorgesehen sind.

Gemäß einer bevorzugten Ausführungsform sind im Boden des Ofens poröse Steine oder Düsen zur Zuführung der zusätzlichen Gasströme vorgesehen, vorzugsweise an den Stellen, die vertikal unter den Auftreffflächen (Brennflecken) der Plasmafackeln liegen.

Vorteilhaft ist im Bereich der Sumpfoberfläche ein horizontal gerichteter Einlaß für einen Gasstrom vorgesehen.

Zweckmäßig sind die Plasmabrenner in axialer Richtung zwecks Regelung der Länge der Plasmafackeln verschiebbar.

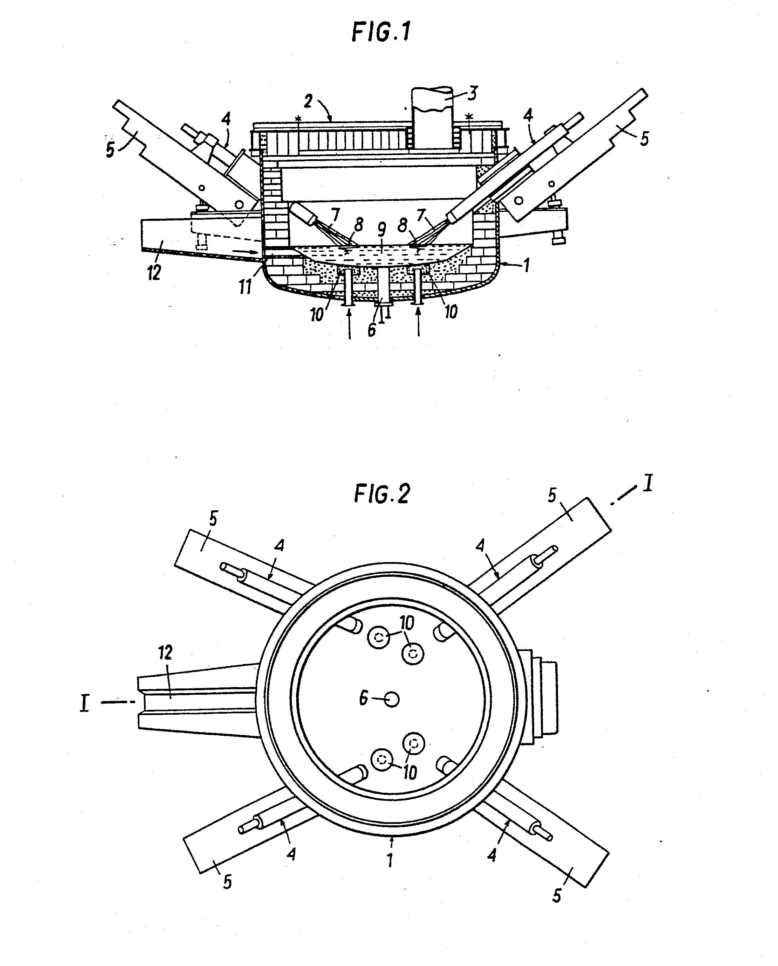

Eine Schmelzanlage zur Durchführung des erfindungsgemäßen Verfahrens ist in der Zeichnung dargestellt, wobei in Fig. 1 ein Vertikalschnitt und in Fig. 2 eine Draufsicht auf den Ofen bei abgenommenem Deckel dargestellt sind.

In Fig. 1 ist mit 1 der feuerfest ausgekleidete Ofenkörper bezeichnet, auf dem ein feuerfest ausgekleideter Deckel 2 aufgesetzt ist, der eine Gasabzugsleitung 3 aufweist. Seitlich durch die Ofenwände sind vier Plasmabrenner 4 geführt, die auf einer Lafette 5 in axialer Richtung verschiebbar montiert und mit der Lafette verschwenkbar sind. Im Boden des Ofens ist die Gegenelektrode 6 angeordnet.

Die von den Plasmabrennern erzeugten Fackeln sind mit 7 und ihre Auftreffflächen auf das Bad 9 (Brennflecke), nachdem die Einsatzstoffe niedergeschmolzen sind, mit 8 bezeichnet. Vertikal darunter sind poröse Steine 10 angeordnet, durch welche während des Niederschmelzens des Einsatzgutes zusätzliche Gasströme eingeleitet werden. Im Bereich der Sumpfoberfläche ist noch ein horizontal gerichteter Einlaß 11 für einen zusätzlichen Gasstrom vorgesehen. Dieser kann auch dazu nützlich sein, um beim Abgießen des geschmolzenen Gutes durch den Abstich 12 eventuell vorhandene Schlacke zurückzuhalten, bzw. ein Abschlacken durch die Ofentür zu erleichtern.

Das erfindungsgemäße Verfahren wird durch die folgenden Beispiele näher erläutert:

In einen Schmelzofen (Fassungsinhalt 1 m$^3$) mit einem zentral durch den Deckel geführten Plasmabrenner wurden 500 kg Ferromangan fines (76 % Mangan, Rest: Kohle, Eisen) chargiert. Der Plasmabrenner wurde mit Argon betrieben, wobei die zugeführte Gasmenge 1 m$^3$/h betrug. Die zugeführte Energie bei einer Spannung von 280 V betrug 300 kW. Die Fackellänge war 32 cm. Die aufgewendete Gesamtenergie betrug 750 kWh/t.

Die Charge wurde unter Verwendung des Einsatzgutes
gleicher Zusammensetzung wiederholt, wobei jedoch in
Luft suspendierter Kohlestaub durch eine Stahllanze
in den Ofen eingeblasen wurde; dabei verkürzte sich die
Länge der Fackel auf 20 cm und die Gesamtspannung stieg
auf 320 V an. Der CO-Gehalt betrug am Ende des Schmelzvorganges über 60 % im Ofenraum. Die erforderliche
Schmelzenergie wurde dabei auf 600 kWh/t reduziert, was
bedeutet, daß der Energieeintrag in das Schmelzgut
erheblich verbessert und die Übertragung der Wärme auf
die Ofenwände entsprechend reduziert wurde.

Unter Verwendung einer Einrichtung nach den Fig. 1 und
2 wurde Stahlschrott mit einer Dichte von 1,7 $t/m^3$
niedergeschmolzen, u.zw. wurden 30 t dieses Schrottes
in den Ofen chargiert. Die vier Plasmabrenner wurden
zu Beginn des Schmelzens mit Argon betrieben, wobei
14 MW bei einer Bogenspannung von 600 V aufgewendet wurden. Zu Beginn und während der ersten Phase des Schmelzens betrug die Länge der Fackeln 1 m, wobei die Spitze
der Fackeln in den Schrott hineinreichte. Nach Bildung
eines Sumpfes und entsprechendem Kleinerwerden der Oberfläche wurde durch die porösen Bodensteine CO zugeführt
und die Plasmafackeln in axialer Richtung gegen den
Sumpf verschoben, wobei sich die Fackellänge auf 30 cm
bei gleichbleibender Leistung verkürzte. Dabei wurde
ein Energieeintrag von 420 kWh/t erreicht, wogegen ohne
Zuführung des CO die aufgewendete Gesamtenergie (Einschmelzenergieverbrauch) 470 kWh/t betragen hätte.

In einen Reduktionsofen mit 250 l Inhalt und einem
zentralen, durch den Ofendeckel geführten Plasmabrenner,
der mit Argon betrieben wurde und eine Spannung von
250 V und 200 kW Leistung hatte, wurden 200 kg LD-Staub
folgender Zusammensetzung: $Fe_{gesamt} = 40,8$ %, $Fe_{metallisch}$
= 0,8 %; FeO = 3,90 %; $Fe_2O_3 = 52,9$ %; Zn = 1,35 % chargiert, wobei der Staub durch eine Förderschnecke kontinuierlich zugeführt und in den Strahlungsbereich der Plasmafackel fallend eingebracht wurde. Die zugeführte Menge betrug 30 kg/h. Gleichzeitig wurde Kohlegrus, ebenfalls kontinuierlich in den Bereich der Plasmafackel fallend in einer Menge von 15 kg/h zugeführt. Dabei bildete sich ein Plasmagas, welches an der Mündung des Brenners aus Argon, an der Auftreffstelle des gebildeten Sumpfes jedoch aus CO bestand. Nach einer Reaktionszeit von 6,5 h entstand ein geschmolzenes Reaktionsprodukt folgender Zusammensetzung: $Fe_{gesamt}$ = 88,5 %; $Fe_{metallisch}$ = 82,2 %; FeO = 1,0 %; $Fe_2O_3$ = 7,85 %; Zn = 0,04 %. Der Metallisierungsgrad des Prozesses beträgt damit 93 %.

Die üblicherweise bei solchen Prozessen aufzuwendende Gesamtenergie von etwa 3000 kWh/t wurde erfindungsgemäß auf etwa 2500 kWh/t reduziert.

Bei diesem Beispiel wird die Bildung der verschiedenen Zonen dadurch erreicht, daß weniger Argon als sonst üblich zugeführt wird.

Bei diesem Beispiel wird außerdem eine Entzinkung des LD-Staubes erreicht.

Patentansprüche:

1. Verfahren zur Durchführung von Schmelz-, schmelzmetallurgischen und/oder reduktionsmetallurgischen Prozessen in einem Plasmaschmelzofen, in dessen Innenraum frei brennende Plasmafackeln zwischen durch den Deckel oder durch die Seitenwände des Ofenkörpers geführten Plasmabrennern und einer Bodenelektrode erzeugt werden, und einzuschmelzende bzw. umzusetzende Zuschlag- bzw. Reaktionsstoffe in den Bereich der Plasmafackeln chargiert werden, dadurch gekennzeichnet, daß zusätzliche, vom ursprünglichen Plasmagas verschiedene Gasströme in die frei brennenden Plasmafackeln eingeleitet werden, um den Energieeintrag in das schmelzflüssige Reaktionsbad zu erhöhen bzw. dessen Temperatur zu regeln.

2. Verfahren nach Anspruch 1, dadurch gekennzeichnet, daß die zusätzlichen Gasströme durch poröse Steine oder Düsen im Boden des Plasmaofens zugeleitet werden, wobei sie die Auftreffflächen (Brennflecke) von schräg auf die Oberfläche des Einschmelzgutes (Sumpfoberfläche) gerichteten Plasmafackeln treffen.

3. Verfahren nach Anspruch 1, dadurch gekennzeichnet, daß in den zusätzlichen Gasströmen feinteilige Zuschlagbzw. Reaktionsstoffe suspendiert und dem Reaktionsbad zugeführt werden.

4. Verfahren nach Anspruch 3, dadurch gekennzeichnet, daß als feinteilige Zuschlag- bzw. Reaktionsstoffe Kalk, Erze für Ferrolegierungen, Kohle oder eisenoxidhältige Materialien verwendet werden.

5. Einrichtung zur Durchführung des Verfahrens nach den Ansprüchen 1 bis 4, mit einem Ofen, durch dessen Deckel (2) bzw. Seitenwände Plasmabrenner (4) geführt sind und in dessen Boden eine Gegenelektrode (6) angeordnet ist, dadurch gekennzeichnet, daß Zuführvorrichtungen für zusätzliche Gasströme in den Bereich der Plasmafackeln (7) vorgesehen sind.

6. Einrichtung nach Anspruch 5, dadurch gekennzeichnet, daß im Boden des Ofens poröse Steine oder Düsen (10) zur Zuführung der zusätzlichen Gasströme vorgesehen sind, vorzugsweise an den Stellen (8), die vertikal unter den Auftreffflächen (Brennflecken) (8) der Plasmafackeln (7) liegen.

7. Einrichtung nach Anspruch 5 oder 6, dadurch gekennzeichnet, daß im Bereich der Sumpfoberfläche ein horizontal gerichteter Einlaß (11) für einen Gasstrom vorgesehen ist.

8. Einrichtung nach den Ansprüchen 5 bis 7, dadurch gekennzeichnet, daß die Plasmabrenner (4) in axialer Richtung zwecks Regelung der Länge der Plasmafackeln (7) verschiebbar sind.

- ¼ -

## FIG.1

## FIG.2